# EUROPÄISCHE PATENTSCHRIFT

(11) **EP 0 828 776 B1**
(45) Veröffentlichungstag und Bekanntmachung des Hinweises auf die Patenterteilung: **06.10.1999**
(21) Anmeldenummer: 96916129.8
(22) Anmeldetag: 25.05.1996
(51) Int. Cl.: C08G 18/62, C09D 151/08

(54) **BESCHICHTUNGSMITTEL AUF DER BASIS EINES HYDROXYLGRUPPENHALTIGEN POLYACRYLATHARZES UND SEINE VERWENDUNG IN VERFAHREN ZUR HERSTELLUNG EINER MEHRSCHICHTLACKIERUNG**
COATING AGENT BASED ON A HYDROXYL GROUP-CONTAINING POLYACRYLATE RESIN AND ITS USE IN PROCESSES FOR PRODUCING A MULTICOAT PAINT SYSTEM
AGENT DE REVETEMENT A BASE DE RESINE POLYACRYLATE CONTENANT DES GROUPES HYDROXYLE ET SON UTILISATION DANS DES PROCEDES DE REALISATION DE REVETEMENTS DE PEINTURE MULTICOUCHE

(30) Priorität: 31.05.1995 DE 19519807
(43) Veröffentlichungstag der Anmeldung: 18.03.1998
(73) Patentinhaber: BASF Coatings AG, 48165 Münster (DE)
(72) Erfinder: BRÜNNEMANN, Michael, D-48165 Münster (DE); BORGHOLTE, Harald, D-48151 Münster (DE); HOFFMANN, Peter, D-48308 Senden (DE); RUBBERT, Bernhard, Farmington Hills, MI 48336 (US); HALLMANN, Olaf, D-48165 Münster (DE)
(74) Vertreter: Fitzner, Uwe, Dr.
(86) Internationale Anmeldenummer: EP9602153
(87) Internationale Veröffentlichungsnummer: WO9638490

(56) Entgegenhaltungen:
- EP-A- 0 449 613
- EP-A- 0 550 259
- DE-A- 4 119 857
- DE-A- 4 124 167
- US-A- 4 673 718
- CHEMICAL ABSTRACTS, vol. 118, no. 16, 19.April 1993 Columbus, Ohio, US; abstract no. 149525n, SUKEJIMA ET AL: "ACRYLIC POLYURETHANE COATING COMPOSITIONS" XP000404729 & JP,A,04 292 674 (KANSAI PAINT)

## Beschreibung

Die vorliegende Erfindung betrifft ein Beschichtungsmittel, enthaltend
(A) mindestens ein hydroxylgruppenhaltiges Polyacrylatharz und
(B) mindestens ein Isocyanatvernetzungsmittel.

Die vorliegende Erfindung betrifft außerdem Verfahren zur Herstellung eines mehrschichtigen, schützenden und/oder dekorativen überzuges auf einer Substratoberfläche sowie die Verwendung der Beschichtungsmittel im Bereich der Autoreparaturlackierung.

Insbesondere an Überzugsmittel, die im Bereich der Autoreparaturlackierung eingesetzt werden, werden sehr hohe Qualitätsansprüche gestellt. So müssen diese Überzugsmittel bei niedrigen Temperaturen (≤ 100°C, bevorzugt ≤ 80°C) aushärtbar sein und dabei bereits nach weniger als 7 h staubtrocken und klebfrei sein. Ferner ist eine gute Lösemittelbeständigkeit, Witterungsbeständigkeit, Abklebfestigkeit, Vergilbungsbeständigkeit, Schleifbarkeit und niedrige Eigenfarbe der resultierenden Beschichtungen gefordert. Darüber hinaus müssen die Beschichtungen überlackierbar sein, um so zu gewährleisten, daß auch Lackschäden im angrenzenden Bereich und im Bereich der Reparaturlackierung ausgebessert werden können.

Insbesondere im Bereich der Großfahrzeuglackierung, wie z.B. der Lackierung von Lkw-Aufbauten, ist die Abklebefestigkeit der resultierenden Beschichtungen von Bedeutung. Bei Großfahrzeugen werden nämlich üblicherweise Schriftzüge aufgebracht, zu deren Auftragung das Abkleben des angrenzenden Bereichs erforderlich ist. Bei einer unzureichenden Abklebefestigkeit müssen die Markierungen durch aufwendiges Schleifen und Polieren von Hand entfernt werden, was mit einem erheblichen Kostenaufwand verbunden ist.

Aus der DE-A-41 24 167 sind nun Klarlacke für die Automobillackierung bekannt, die als Bindemittel Copolymerisate enthalten, bei denen 9 bis 20 Gew.-% eines methoxyfunktionellen Polysiloxans einkondensiert sind. Diese aus der DE-A-41 24 167 bekannten Klarlacke weisen jedoch aufgrund des hohen Anteils an Polysiloxan den Nachteil auf, daß der Decklackstand bzw. der Verlauf der Klarlacke negativ beeinflußt wird.

Ferner sind aus der EP-A-603 561 Überzugsmittel bekannt, die als Bindemittel Copolymerisate enthalten, bei denen 3 bis 40 Gew.-% eines α,ω-hydroxy-, carboxy- und/oder epoxyfunktionellen Polysiloxans einpolymersiert sind.

Weiterhin ist aus der JP-A 2-163177 ein überzugsmittel auf der Basis von hydroxylgruppenhaltigen Acrylatcopolymerisaten und Polyisocyanaten bekannt, das insbesondere als Bautenanstrichmittel eingesetzt wird. Die Beschichtungen zeichnen sich dabei durch eine verbesserte Witterungsstabilität aus, die durch Einpolymerisieren von 0,5 bis 15 Gew.-% eines Polysiloxanmakromonomers in das hydroxylgruppenhaltige Acrylatcopolymerisat erzielt wird. Die Verwendung eines Umsetzungsproduktes aus Acryl- und/oder Methacrylsäure mit dem Glycidylester einer in α-Stellung verzweigten Monocarbonsäure mit 5 bis 18 C-Atomen je Molekül als Monomerkomponente zur Herstellung der Acrylatcopolymerisate ist in dieser Schrift jedoch nicht beschrieben.

Diese aus der JP-A 2-163177 bekannten Beschichtungsmittel weisen insbesondere den Nachteil auf daß, der Decklackstand bzw. Verlauf der beschriebenen Beschichtungsmittel durch den hohen Siloxangehalt der als Bindemittel eingesetzten Copolymerisate negativ beeinflußt wird.

Aus der US-A 4,754,014 sind Beschichtungsmittel auf der Basis von hydroxylgruppenhaltigen Acrylatcopolymerisaten, die mit Polysiloxanmakromonomeren modifiziert werden, bekannt. Die Polysiloxanmakromonomere werden hergestellt durch Umsetzung eines hydroxyfunktionellen Polysiloxans mit einem epoxyfunktionellen Acrylat.

Diese aus der US-A-4,754,014 bekannten Beschichtungsmittel weisen eine hohe Flexibilität auf und sind somit besonders für die Lackierung von Kunststoffmaterialien, wie z.B. Stoßstangen, geeignet. Diese Beschichtungsmittel unterscheiden sich von den Beschichtungsmitteln der vorliegenden Anmeldung insbesondere dadurch, daß die Verwendung eines Umsetzungsproduktes aus Acryl- und/oder Methacrylsäure mit dem Glycidylester einer in α-Stellung verzweigten Monocarbonsäure mit 5 bis 18 C-Atomen je Molekül als Monomerkomponente zur Herstellung der Acrylatcopolymerisate in dieser Schrift nicht beschrieben ist.

Aus der EP-B-175092 ist es schließlich bekannt, daß die Verlaufseigenschaften sowie die Gleitfähigkeit und Kratzfestigkeit von Beschichtungen dadurch verbessert werden können, daß den Beschichtungsmitteln polyethergruppenfreie, polyestermodifizierte Siloxane zugesetzt werden. Der Einsatz von polymerisierbaren, ethylenisch ungesättigten Polysiloxanmakromonomeren zur Modifizierung von Bindemitteln auf der Basis von Acrylatcopolymerisaten ist in der EP-B 175092 nicht beschrieben.

Der vorliegenden Erfindung liegt somit die Aufgabe zugrunde, Beschichtungsmittel auf der Basis von hydroxylgruppenhaltigen Polyacrylatharzen und Isocyanatvernetzern zur Verfügung zu stellen, die zu überlackierbaren Beschichtungen mit einer guten Witterungsbeständigkeit sowie einer guten Lösemittel- und Chemikalienbeständigkeit führen. Um für den Bereich der Autoreparaturlackierung einsetzbar zu sein, sollten die Beschichtungsmittel ferner bei niedrigen Temperaturen härtbar sein und dabei bereits nach möglichst kurzer Zeit zu staubtrockenen und klebfreien Oberflächen führen. Weiterhin sollten die Überzugsmittel schleifbar sein, eine Überlackierbarkeit auch ohne Anschleifen besitzen und eine gute Abklebfestigkeit und Spritznebelaufnahme haben.

Schließlich sollten die o.g. Eigenschaften auch erreicht werden, wenn die Beschichtungsmittel bei niedrigen Temperaturen von ca. 8 bis 12 °C appliziert werden.

Diese Aufgabe wird überraschenderweise durch ein Beschichtungsmittel, enthaltend
(A) mindestens ein hydroxylgruppenhaltiges Polyacrylatharz und
(B) mindestens ein Isocyanatvernetzungsmittel,
gelöst. Das Beschichtungsmittel ist dadurch gekennzeichnet, daß das Polyacrylatharz erhältlich ist, indem in einem organischen Lösemittel oder Lösemittelgemisch und in Gegenwart mindestens eines Polymerisationsinitiators
(a1) ein von (a2), (a3), (a5), (a6) und (a7) verschiedener, mit (a2), (a3) , (a4), (a5) , (a6) und (a7) copolymerisierbarer, im wesentlichen carboxylgruppenfreier (Meth)acrylsäureester oder ein Gemisch aus solchen Monomeren,
(a2) ein mit (a1), (a3), (a4), (a5), (a6) und (a7) copolymerisierbares, von (a3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(a3) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
(a4) ggf. ein mindestens eine Carboxylgruppe pro Molekül tragendes, mit (a1), (a2), (a3), (a5), (a6) und (a7) copolymerisierbares, ethylenisch ungesättigtes Monomer oder ein Gemisch aus solchen Monomeren,
(a5) ein Polysiloxanmakromonomer mit einem zahlenmittleren Molekulargewicht von 1.000 bis 40.000 und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Monomeren,
(a6) ein vinylaromatischer Kohlenwasserstoff oder ein Gemisch aus solchen Monomeren und
(a7) ggf. ein mit (a1), (a2), (a3), (a4), (a5) und (a6) copolymerisierbares, von (a1), (a2), (a3), (a5) und (a6) verschiedenes, im wesentlichen carboxylgruppenfreies, ethylenisch ungesättigtes Monomer oder ein Gemisch aus solchen Monomeren
polymerisiert werden, wobei (a1), (a2), (a3), (a4), (a5), (a6) und (a7) in Art und Menge so ausgewählt werden, daß das Polyacrylatharz (A) die gewünschte OH-Zahl und Säurezahl aufweist und wobei die Menge an Komponente (a5) weniger als 5 Gew.-%, bezogen auf das Gesamtgewicht der zur Herstellung des Polyacrylatharzes eingesetzten Monomeren, beträgt.

Die vorliegende Erfindung betrifft außerdem Verfahren zur Herstellung eines mehrschichtigen, schützenden und/oder dekorativen Überzuges auf einer Substratoberfläche sowie die Verwendung der Beschichtungsmittel im Bereich der Autoreparaturlackierung.

Es ist überraschend und war nicht vorhersehbar, daß die erfindungsgemäßen Beschichtungsmittel eine sehr gute Abklebe- und Lösemittelbeständigkeit aufweisen, ohne daß der Decklackstand gegenüber herkömmlichen Beschichtungsmitteln verschlechtert wird. Ferner weisen die erfindungsgemäßen Beschichtungsmittel den Vorteil auf, daß sie einen guten Oberflächenslip und eine gute Härte haben. Vorteilhaft ist ferner die verbesserte Witterungsbeständigkeit der Beschichtungsmittel.

Im folgenden werden nun zunächst die einzelnen Bestandteile der erfindungsgemäßen Beschichtungsmittel näher erläutert.

Bevor die Herstellung der erfindungsgemäß einzusetzenden Polyacrylatharze näher beschrieben wird, werden zwei Begriffserklärungen vorausgeschickt:
1. Als Abkürzung für "Methacrylsäure oder Acrylsäure" wird gelegentlich (Meth)acrylsäure verwendet.
2. Die Formulierung "im wesentlichen carboxylgruppenfrei" soll ausdrücken, daß die Komponenten (a1), (a2), (a3), (a5), (a6) und (a7) einen geringen Carboxylgruppengehalt (höchstens aber soviel, daß ein aus diesen Komponenten hergestellten Polyacrylatharz eine Säurezahl von höchstens 10 mg KOH/g hat) aufweisen können. Es ist aber bevorzugt, daß der Carboxylgruppengehalt der Komponenten (a1), (a2), (a3), (a5), (a6) und (a7) so niedrig wie möglich gehalten wird. Besonders bevorzugt werden carboxylgruppenfreie (a1), (a2), (a3), (a5), (a6) und (a7) Komponenten eingesetzt.

Es ist erfindungswesentlich, daß die Beschichtungsmittel als Bindemittel ein hydroxylgruppenhaltiges, mit den Polysiloxanmakromonomeren modifiziertes Polyacrylatharz enthalten.

Für die Modifizierung des Polyacrylatharzes sind Polysiloxanmakromonomere geeignet, die ein zahlenmittleres Molekulargewicht von 1.000 bis 40.000, bevorzugt von 2.000 bis 10.000 und im Mittel 0,5 bis 2,5, bevorzugt 0,5 bis 2,0, ethylenisch ungesättigte Doppelbindungen pro Molekül oder im Mittel 0,5 bis 2,5, bevorzugt 1,0 bis 2,0, Epoxidgruppen pro Molekül aufweisen.

Die Einsatzmenge des oder der Polysiloxanmakromonomeren (a5) zur Modifizierung der Polyacrylatharze (A) beträgt weniger als 5 Gew.-%, bevorzugt weniger als 3 Gew.-%, besonders bevorzugt 0,1 bis 1,0 Gew.-%, ganz besonders bevorzugt 0,3 bis 0,7 Gew.-%, jeweils bezogen auf das Gesamtgewicht der zur Herstellung des Polyacrylatharzes (A) eingesetzten Monomeren.

Die Verwendung derartiger Polysiloxanmakromonomerer führt zu einer deutlich verbesserten Abklebebeständigkeit und Lösemittelbeständigkeit der resultierenden Beschichtungen.

Das erfindungsgemäß eingesetzte Polyacrylatharz (A) ist erhältlich, indem in einem organischen Lösemittel oder Lösemittelgemisch und in Gegenwart mindestens eines Polymerisationsinitiators
(a1) ein von (a2), (a3), (a5), (a6) und (a7) verschiedener, mit (a2), (a3), (a4) , (a5), (a6) und (a7) copolymerisierbarer, im wesentlichen carboxylgruppenfreier (Meth)acrylsäureester oder ein Gemisch aus solchen Monomeren,
(a2) ein mit (a1), (a3), (a4), (a5), (a6) und (a7) copolymerisierbares, von (a3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(a3) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
(a4) ggf. ein mindestens eine Carboxylgruppe pro Molekül tragendes, mit (a1), (a2), (a3), (a5), (a6) und (a7) copolymerisierbares, ethylenisch ungesättigtes Monomer oder ein Gemisch aus solchen Monomeren,
(a5) ein Polysiloxanmakromonomer mit einem zahlenmittleren Molekulargewicht von 1.000 bis 40.000 und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Monomeren,
(a6) ein vinylaromatischer Kohlenwasserstoff oder ein Gemisch aus solchen Monomeren und
(a7) ggf. ein mit (a1), (a2), (a3), (a4), (a5) und (a6) copolymerisierbares, von (a1), (a2), (a3), (a5) und (a6) verschiedenes, im wesentlichen carboxylgruppenfreies, ethylenisch ungesättigtes Monomer oder ein Gemisch aus solchen Monomeren
polymerisiert werden, wobei (a1), (a2), (a3), (a4), (a5), (a6) und (a7) in Art und Menge so ausgewählt werden, daß das Polyacrylatharz (A) die gewünschte OH-Zahl und Säurezahl aufweist und wobei die Menge an Komponente (a5) weniger als 5 Gew.-%, bezogen auf das Gesamtgewicht der zur Herstellung des Polyacrylatharzes eingesetzten Monomeren, beträgt.

Zur Herstellung der erfindungsgemäß einzusetzenden Polyacrylatharze kann als Komponente (a1) jeder mit (a2) , (a3), (a4), (a5) , (a6) und (a7) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat, genannt. Bevorzugt werden Gemische aus Alkylacrylaten und/oder Alkylmethacrylaten als (a1)-Komponente eingesetzt, die zu mindestens 20 Gew.-% aus n-Butyl-und/oder t-Butylacrylat und/oder n-Butyl- und/oder t-Butylmethacrylat bestehen.

Als Komponente (a1) können auch Ethyltriglykol(meth)acrylat und Methoxyoligoglykol(meth)acrylat mit einem zahlenmittleren Molekulargewicht von vorzugsweise 550 oder andere ethoxylierte und/oder propoxylierte hydroxylgruppenfreie (Meth)acrylsäurederivate eingesetzt werden.

Als Komponente (a2) können mit (a1), (a3), (a4), (a5), (a6) und (a7) copolymerisierbare und von (a3) verschiedene, ethylenisch ungesättigte Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure oder einer anderen α,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. ε-Caprolacton und diesen Hydroxyalkylestern, oder Mischungen aus diesen Hydroxyalkylestern bzw. ε-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Komponente (a2) auch olefinisch ungesättigte Polyole eingesetzt werden. So kann als Komponente (a2) zumindest teilweise Trimethylolpropanmonoallylether eingesetzt werden. Der Anteil an Trimethylolpropanmonoallylether beträgt in diesem Fall üblicherweise 2 bis 10 Gew.-%, bezogen auf das Gesamtgewicht der zur Herstellung des Polyacrylatharzes eingesetzten Monomeren (a1) bis (a7). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere (a2), insbesondere aber anteilsmäßig in Kombination mit anderen der genannten hydroxylgruppenhaltigen Monomeren (a2), eingesetzt werden.

Als Komponente (a3) wird das Umsetzungsprodukt aus Acrylsäure und/oder Methacrylsäure mit dem Glycidylester einer in α-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären α-Kohlenstoffatom kann vorher, während oder nach der Polymerisationsreaktion erfolgen. Bevorzugt wird als Komponente (a3) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a4) kann jedes mindestens eine Carboxylgruppe pro Molekül tragende mit (a1), (a2), (a3), (a5), (a6) und (a7) copolymerisierbare, ethylenisch ungesättigte Monomer oder ein Gemisch aus solchen Monomeren eingesetzt werden. Als Komponente (a4) werden vorzugsweise Acrylsäure und/oder Methacrylsäure eingesetzt. Es können aber auch andere ethylenisch ungesättigte Säuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Als Komponente (a4) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a5) geeignet sind Polysiloxanmakromonomere, die ein zahlenmittleres Molekulargewicht von 1.000 bis 40.000, bevorzugt von 2.000 bis 10.000, und im Mittel 0,5 bis 2,5, bevorzugt 0,5 bis 2,0, ethylenisch ungesättigte Doppelbindungen pro Molekül oder im Mittel 0,5 bis 2,5, bevorzugt 1,0 bis 2,0, Epxidgruppen pro Molekül aufweisen.

Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a5) Polysiloxanmakromonomere der folgenden Formel eingesetzt: 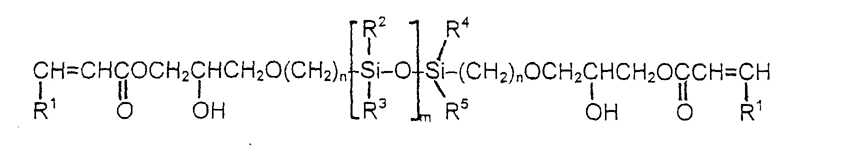 mit
R¹ = H oder CH₃
R², R³, R⁴, R⁵ = gleiche oder verschiedene aliphatische Kohlenwasserstoffreste mit 1 bist 8 C-Atomen, insbesondere Methyl, oder Phenylrest.
n = 2 bis 5, bevorzugt 3
m = 8 bis 80

Als Beispiel für ein derartiges Polysiloxanmakromonomer wird das α,ω-acryloxyorganofunktionelle Polydimethylsiloxan der Formel 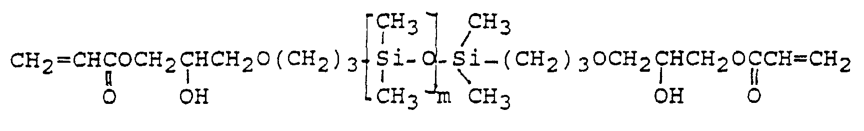 mit m ≈ 30 bis 50 eingesetzt.

Besonders bevorzugt wird als Polysiloxanmakromonomer ein acryloxyorganofunktionelles Siloxan mit einer Acryloxyfunktionalität < 2 eingesetzt. Als Beispiel sei ein Polysiloxan der folgenden Formel genannt: 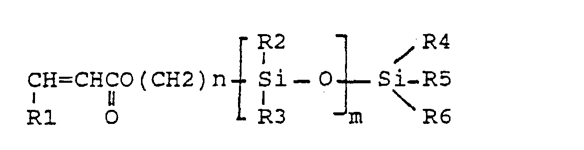 in welcher m ≈ 8 bis 80 und n = 1 bis 5 bedeutet und R1 Wasserstoff oder eine Methylgruppe, R2 und R3 gleiche oder verschiedene aliphatische Kohlenwasserstoffreste mit 1 bis 8 C-Atomen, insbesondere Methyl, oder einen Phenylrest und R4, R5 und R6 einen Halogenrest oder einen Alkoxyrest mit 1 bis 4 C-Atomen oder eine Hydroxylgruppe bedeuten.
Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxygruppen dieser Verbindungen zurückzuführen sind. In Abhängigkeit von den Reaktionsbedingungen beinhaltet die Umsetzung zusätzlich zu den Dehydratisierungsreaktion eine dealkohalisierende Kondensation. Falls die Verbindungen (1) oder (2) Halogenreste enthalten, wird die Reaktion zwischen (1) und (2) bewerkstelligt durch Dehydrohalogenierung.

Die Bedingungen, unter denen die Reaktion zwischen der Verbindung (1) und der Verbindung (2) durchgeführt wird, sind ebenfalls in der internationalen Patentanmeldung mit der internationalen Veröffentlichungsnummer WO 92/22615 (≙ DE-A-4 119 857) auf der Seite 15, Zeile 23, bis Seite 18, Zeile 10, beschrieben.

Besonders bevorzugt wird als Komponente (a5) das im Handel unter der Bezeichnung AK 5 der Firma Toagosei Chemical Industries Co., Ltd. ( in Deutschland vertreten durch die Firma Marubeni) erhältliche Polysiloxanmakromonomer mit 0,5 bis 1,5, im Mittel mit einer Methacryloylendgruppe und mit einem zahlenmittleren Molekulargewicht von 5.000 eingesetzt.

Geeignet sind ferner auch epoxyfunktionelle Polysiloxanmakromonomere der folgenden Formel: 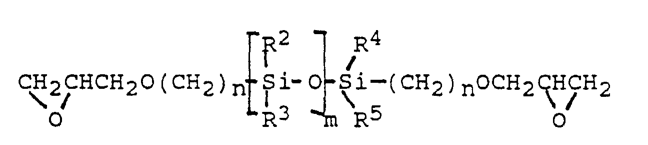 mit
R², R³, R⁴, R⁵ = gleiche oder verschiedene aliphatische Kohlenwasserstoffreste mit 1 bis 8 C-Atomen, insbesondere Methyl, oder Phenylrest.
n = 2 bis 5, bevorzugt 3
m = 8 bis 80.

Besonders bevorzugt wird das epoxyfunktionelle Polydimethylsiloxan der Formel 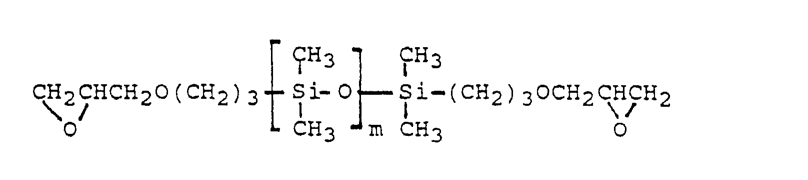 mit m = 50 und einem Epoxyäquivalentgewicht von 1900 eingesetzt. Dieses Polysiloxanmakromonomer ist beispielsweise unter der Bezeichnung Versuchsprodukt TEGOMER® E-Si 2530 der Firma Th. Goldschmidt im Handel erhältlich.

Als Komponente (a5) geeignet sind ferner auch die im Handel unter den folgenden Namen erhältlichen Produkte: Polysiloxanmakromonomer AK 30 der Firma Toagosei Chemical Industries Co., Ltd. (in Deutschland vertreten durch die Firma Marubeni) sowie verschiedene, unter den Bezeichnungen TEGOMER® E-Si und TEGOMER® V-Si vertriebene Produkte der Firma Th. Goldschmidt.

Als Komponente (a6) werden vinylaromatische Kohlenwasserstoffe, wie Styrol, α-Alkylstyrole, wie α-Methylstyrole, Chlorstyrole, o-, m- und p-Methylstyrol, 2,5-Dimethylstyrol, p-Methoxystyrol, p-tert.-Butylstyrol, p-Dimethylaminostyrol, p-Acetamidostyrol und Vinyltoluol, eingesetzt, wobei bevorzugt Vinyltoluole und insbesondere Styrol eingesetzt werden.

Als Komponente (a7) können alle mit (a1), (a2), (a3), (a4), (a5) und (a6) copolymerisierbaren, von (a1), (a2), (a3), (a5) und (a6) verschiedenen, im wesentlichen carboxylgruppenfreien ethylenisch ungesättigten Monomere oder Gemische aus solchen Monomeren eingesetzt werden. Als Komponente (a7) werden vorzugsweise Alkoxyalkylacrylate und -methacrylate, mono- und polycyclische aliphatische Ester der Methacrylsäure und/oder Acrylsäure, vorzugsweise Cyclohexylacrylat, Cyclohexylmethacrylat, 4-tert.-Butylcyclohexylacrylat, 4-tert.-Butylcyclohexylmethacrylat, Isobornylacrylat und Isobornylmethacrylat, insbesondere 4-tert.-Butylcyclohexylacrylat und/oder 4-tert.-Butylcyclohexylmethacrylat, Vinylester sowie Alkylester ethylenisch ungesättigter Carbonsäuren, ausgenommen Alkylester der Acryl- und Methacrylsäure, wie z.B. Alkylester der Croton-, Isocroton- und Maleinsäure, eingesetzt.

Besonders bevorzugt eingesetzte Acrylatharze werden erhalten durch Polymerisation von
a1) 5 bis 74 Gew.-%, bevorzugt 5 bis 30 Gew.-%, der Komponente (a1),
(a2) 10 bis 40 Gew.-%, bevorzugt 15 bis 25 Gew.-%, der Komponente (a2),
(a3) 10 bis 50 Gew.-%, bevorzugt 15 bis 40 Gew.-%, der Komponente (a3),
(a4) 0 bis 10 Gew.-%, bevorzugt 0,1 bis 6 Gew.-%, der Komponente (a4),
(a5) weniger als 5 Gew.-%, bevorugt weniger als 3 Gew.-%, besonders bevorzugt 0,1 bis 1 Gew.-% und ganz besonders bevorzugt 0,3 bis 0,7 Gew.-%, der Komponente (a5),
(a6) 5 bis 40 Gew.-%, bevorzugt 10 bis 30 Gew.-%, der Komponente (a6) und
(a7) 0 bis 40 Gew.-%, bevorzugt 0 bis 30 Gew.-%, der Komponente (a7),
wobei die Summe der Gewichtsanteile der Komponenten (a1) bis (a7) jeweils 100 Gew.-% beträgt.

Die erfindungsgemäß eingesetzten Polyacrylatharze (A) weisen üblicherweise eine OH-Zahl von 60 bis 200, bevorzugt von 100 bis 160 mgKOH/g, eine Säurezahl von 1 bis 60, bevorzugt 1 bis 15 mgKOH/g sowie ein zahlenmittleres Molekulargewicht von 1.000 bis 5.000, bevorzugt von 1.500 bis 4.000, jeweils gelpermeationschromatographisch bestimmt gegen Polystyrolstandard, auf.

Die Herstellung der erfindungsgemäß eingesetzten Polyacrylatharze (A) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen Lösemittel und Polymerisationsinitiatoren eingesetzt. Als Beispiele für brauchbare Lösemittel werden Solvent Naphtha®, Schwerbenzol, verschiedene solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Alkohole, Ether und Ester, wie z.B. Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxypropionsäureethylester und 3-Methyl-3-methoxybutanol sowie Derivate auf Basis von Propylenglykol, z.B. Ethylethoxypropionat, Methoxypropylacetat und ähnliche, genannt.

Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Polymerisation wird zweckmäßigerweise bei einer Temperatur von 80 bis 200°C, vorzugsweise 110 bis 160°C, durchgeführt. Bevorzugt werden als Lösemittel Shellsol® A, Solvent Naphtha® und Butylacetat eingesetzt.

Zur Herstellung des Polyacrylatharzes (A) werden bevorzugt mindestens 60 Gew.-%, besonders bevorzugt 100 Gew.-% der Gesamtmenge der Komponente (a3) zusammen mit einem Teil des Lösemittels in die Vorlage gegeben und auf die jeweilige Polymerisationstemperatur aufgeheizt. Die übrigen Monomeren werden dann bei der Polymerisationstemperatur gleichmäßig zudosiert. Werden als Komponente (a5) Polysiloxanmakromonomere mit einer geringen Reaktivität eingesetzt (Funktionalität < 2), so werden ebenfalls bevorzugt mindestens 60 Gew.-%, besonders bevorzugt 100 Gew.-%, der Gesamtmenge dieses Polysiloxanmakromonomers (a5) in die Vorlage gegeben. Werden dagegen Polysiloxanmakromonomere (a5) mit einer höheren Reaktivität eingesetzt (Funktionalität > 2), so werden diese Polysiloxanmakromonomere bevorzugt zusammen mit den übrigen Monomeren zugegeben.

Dieses spezielle Polymerisationsverfahren fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkärpergehalt ergeben.

Bei der Polyisocyanatkomponente (B) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat("Isophorondiisoyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4"-Triisocyanatotriphenylmethan. Bevorzugt werden, ggf. in Kombination mit den o.g. Isocyanaten, Isocyanuratgruppen und/oder Biuretgruppen und/oder Allophanatgruppen und/oder Uretdiongruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Die Menge des eingesetzten Vernetzers wird so gewählt, daß das Verhältnis der Isocyanatgruppen des Vernetzers zu den Hydroxylgruppen der Komponente (A) im Bereich von 1 : 3 bis 3 : 1 liegt. üblicherweise enthalten die erfindungsgemäßen Beschichtungsmittel 15 bis 45 Gew.-% des Acrylatharzes (A) und 6 bis 20 Gew.-% des Vernetzungsmittels (B), jeweils bezogen auf das Gesamtgewicht des Beschichtungsmittels und bezogen auf den Festkörpergehalt der Komponenten (A) und (B).

Die erfindungsgemäßen Beschichtungsmittel können ggf. ein oder mehrere weitere hydroxylgruppenhaltige, polyestermodifizierte Polyacrylatharze enthalten, wodurch beispielsweise die Lösemittelbeständigkeit und die Härte der resultierenden Beschichtung weiter verbessert werden. Diese polyestermodifizierten Polyacrylatharze (C) werden üblicherweise in einer Menge von 0 bis 50 Gew.-%, bevorzugt 20 bis 45 Gew.-%, jeweils bezogen auf das Gesamtgewicht des Beschichtungsmittels und bezogen auf den Festkörpergehalt des Bindemittels, eingesetzt.

Als Beispiel für derartige polyestermodifizierte Polyacrylatharze (C) seien die in der Deutschen Patentanmeldung DE-A-40 24 204 beschriebenen, in Gegenwart eines Polyesters hergestellten hydroxylgruppenhaltigen Polyacrylatharze (C) genannt. Wegen Einzelheiten sei auf die DE-A-40 24 204, insbesondere die Seite 3, Zeile 18, bis Seite 7, Zeile 53, verwiesen. Geeignet sind außerdem andere polyestermodifizierte Polyacrylatharze (C), die in Gegenwart von Polyestern auf Basis üblicher Di- und Polycarbonsäuren, Di- und Polyole sowie ggf. üblicher Monocarbonsäuren und/oder üblicher Monoole hergestellt worden sind, insbesondere aber polyestermodifizierte Polyacrylatharze, welche, bezogen auf das jeweilige Harz, aus 20 bis 60 Gew.-% mindestens eines Polyesters und 40 bis 80 Gew.-% mindestens eines hydroxylgruppenhaltigen Polyacrylats bestehen, wobei zumindest ein Anteil der Polyacrylate in Gegenwart der Polyester hergestellt worden ist, die Polyester eine OH-Zahl von 90 bis 130 mg KOH/g, eine Säurezahl von weniger als 10 mg KOH/g, ein zahlenmittleres Molekulargewicht von 1300 bis 3500 und eine Polydispersität oder Uneinheitlichkeit des Molekulargewichts von 5 bis 50 aufweisen und die Polyacrylate Hydroxyethylmethacrylat und/oder 4- und/oder 3-Hydroxy-n-butyl-(meth)acrylat einpolymerisiert enthalten und eine OH-Zahl von 50 bis 150 mg KOH/g und eine Säurezahl von 0 bis 10 mg KOH/g aufweisen.

Die erfindungsgemäßen Beschichtungsmittel können ferner ggf. ein oder mehrere weitere hydroxylgruppenhaltige Harze enthalten, wodurch beispielsweise die Lösemittelbeständigkeit und die Härte der resultierenden Beschichtung weiter verbessert werden. Beispielsweise können sie weitere, von dem obenbeschriebenen Acrylatharz (A) verschiedene, hydroxylgruppenhaltige Acrylatharze und/oder Polykondensationsharze (insbesondere Polyester) enthalten.

Üblicherweise werden diese weiteren Bindemittel in einer Menge von 0 bis zu 20 Gew.-%, jeweils bezogen auf das Gesamtgewicht des Beschichtungsmittels und bezogen auf den Festkörpergehalt des Bindemittels, eingesetzt.

Beispiele für solche geeigneten weiteren Bindemittel sind beispielsweise die im Handel unter dem Namen Macrynal® SM 510 und SM 513 der Firma Hoechst erhältlichen Polyacrylatharze.

Die erfindungsgemäßen Beschichtungsmittel enthalten ferner ein oder mehrere organische Lösungsmittel. Diese Lösungsmittel werden üblicherweise in Mengen von 20 bis 70 Gew.-%, bevorzugt von 25 bis 65 Gew.-%, jeweils bezogen auf das Gesamtgewicht des Beschichtungsmittels, eingesetzt.

Beispiele für geeignete Lösungsmittel sind höher substituierte Aromaten, wie z.B. Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Die erfindungsgemäßen Beschichtungsmittel können ggf. außerdem noch übliche Pigmente und/oder Füllstoffe in üblichen Mengen enthalten. In diesem Fall werden die Füllstoffe und/oder Pigmente bevorzugt in einer Menge von 0 bis 40 Gew.-%, bezogen auf das Gesamtgewicht des Beschichtungsmittels, eingesetzt.

Die erfindungsgemäßen Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber, Lichtschutzmittel und ggf. Füllstoffe.

Die Herstellung der Beschichtungsmittel erfolgt in bekannter Weise duch Mischen und ggf. Dispergieren der einzelnen Komponenten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden überzug gehärtet wird.

Die Aushärtung dieser Beschichtungsmittel erfolgt üblicherweise bei Raumtemperatur oder leicht erhöhter Temperatur, bevorzugt bei leicht erhöhter Temperatur, vorteilhafterweise bei Temperaturen unterhalb von 120°C, bevorzugt bei Temperaturen unterhalb von 80°C sowie bevorzugt bei Temperaturen oberhalb von 60°C. Die Beschichtungsmittel können aber auch unter Einbrennbedingungen, d.h. bei Temperaturen von mindestens 120°C, gehärtet werden.

Als Substrate eignen sich insbesondere Metalle sowie Holz, Kunststoff, Glas u.ä..

Aufgrund der kurzen Härtungszeiten und niedrigen Härtungstemperaturen werden die erfindungsgemäßen Beschichtungsmittel bevorzugt für die Autoreparaturlackierung, die Lackierung von Großfahrzeugen und Lkw-Aufbauten verwendet. Sie können aber - je nach eingesetztem Vernetzer - auch für die Automobilserienlackierung eingesetzt werden.
Des weiteren eignen sie sich als Klarlack sowie insbesondere als pigmentierter Decklack.

Gegenstand der vorliegenden Erfindung ist daher auch ein Verfahren zur Herstellung eines mehrschichtigen schützenden und/oder dekorativen Überzuges auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der
   (A) ein hydroxylgruppenhaltiges Polyacrylatharz und
   (B) ein Vernetzungsmittel enthält, aufgebracht wird und anschließend
(4) Basislackschicht und Decklackschicht zusammen gehärtet werden,
dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-OS 41 10 520, DE-OS 40 09 000, der DE-OS-40 24 204, der EP-A-355433, der DE-OS 35 45 618, der DE-OS 38 13 866 und der nicht vorveröffentlichten deutschen Patentanmeldung OS-DE 4232717 A 1 beschriebenen Basislacke.

Geeignet sind außerdem die in der noch nicht veröffentlichten deutschen Patentanmeldung OS-DE 4327416 A 1 beschriebenen Basislacke, die dadurch gekennzeichnet sind, daß sie einen hydroxylgruppenhaltigen Polyester mit einem gewichtsmittleren Molekulargewicht Mw von 40.000 - 200.000 und eine Uneinheitlichkeit Mw/ Mn > 8 enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Mit dem erfindungsgemäßen Beschichtungsmittel können auch oxidativ trocknende, pigmentierte oxidativ trocknende sowie pigmentierte 2K-Polyurethanlacke, die üblicherweise im Bereich der ggf. einschichtigen Autoreparaturlackierung eingesetzt werden, überlackiert werden. Auch in diesem Falle werden Beschichtungen mit den gewünschten vorteilhaften Eigenschaften erhalten. In den folgenden Beispielen wird die Erfindung näher erläutert. Alle Angaben über Teile und Prozente sind Gewichtsangaben, sofern nicht ausdrücklich etwas anderes angegeben wird.

### I.1. Herstellung der hydroxylgruppenhaltigen Acrylatharze E1 bis E3 und V1

Die Herstellung der Acrylatcopolymerisate erfolgte jeweils in einem 4-Liter-Edelstahlpolymerisationskessel mit Rührer, Rückflußkühler, einem Monomerenzulauf und einem Initiatorzulauf. Die jeweils in der Tabelle 1 angegebenen Komponenten werden eingewogen und dann die Vorlage auf 145 °C aufgeheizt.

Mit dem Start aller Zuläufe wird gleichzeitig begonnen, innerhalb von 4 h wird der Monomerenzulauf gleichmäßig zudosiert, innerhalb von 4,5 h wird der Initiatorzulauf gleichmäßig zudosiert. Der Initiatorzulauf endet 30 min nach Ende des Monomerenzulaufs. Während der Polymerisation wird die Temperatur im Kessel auf 142 - 145 °C gehalten. Danach wird noch 2 h nachpolymerisiert. Die so erhaltene Acrylatharzlösung hat einen Festkörper von 70 %. Anschließend wird die Temperatur auf 120°C gesenkt und das Acrylatharz mit der angegebenen Lösemittelmischung auf 54 % Festkörper angelöst.

In die Vorlage werden die jeweils in Tabelle 1 angegebenen Mengen Shellsol A ® (handelsübliches, aromatisches Lösemittelgemisch mit einem Siedebereich von 165 bis 185 °C der Firma Shell Chemie), die jeweils in Tabelle 1 angegebene Menge an Siloxanmonomer sowie die in der Tabelle 1 angegebene Menge des handelsüblichen Glycidylesters der Versaticsäure (Handelsprodukt Cardura E 10 ® der Firma Shell Chemie) eingewogen. In den Monomerenzulauf werden die jeweils in der Tabelle 1 angegebenen Mengen Methylmethacrylat, Styrol, OH-Monomer, Acrylsäure und Mercaptoethanol eingewogen.

In den Initiatorzulauf werden die in Tabelle 1 angegebenen Mengen Di-tert.Butylperoxid und Xylol eingewogen.

Die zur Anlösung des Acrylatharzes eingesetzte Lösemittelmischung weist folgende Zusammensetzung auf:

| | |
|---|---|
| 334 Teile | Xylol |
| 1429 Teile | Butylacetat |
| 60 Teile | Butoxyl (handelsübliches Lösemittel der Firma |
| 128 Teile | Acetat des 2-Methoxybutanols-Butylglykolacetat |

### I.2. Herstellung des hydroxylgruppenhaltigen Acrylatharzes V2

Die Herstellung des hydroxylgruppenhaltigen Acrylatharzes V2 erfolgt analog zur Herstellung der Acrylatharze E1 bis E3 und V1, allerdings mit dem Unterschied, daß die nach der Nachpolymerisation erhaltene Acrylatharzlösung einen Festkörpergehalt von 50 ± 2 % aufweist. Ein Zusatz der Lösemittelmischung war daher nicht erforderlich.

### I.3. Herstellung des hydroxylgruppenhaltigen Acrylatharzes V3

Die Herstellung des Acrylatcopolymerisates V3 erfolgte jeweils in einem 4-Liter-Edelstahlpolymerisationskessel mit Rührer, Rückflußkühler, einem Monomerenzulauf und einem Initiatorzulauf. Die jeweils angegebenen Komponenten werden eingewogen und dann die Vorlage auf 110°C aufgeheizt.

Mit dem Start aller Zuläufe wird gleichzeitig begonnen; innerhalb von 3 h wird der Monomerenzulauf gleichmäßig zudosiert; innerhalb von 3.5 h wird der Initiatorzulauf gleichmäßig zudosiert. Der Initiatorzulauf endet 30 Minuten nach Ende des Monomerzulaufes. Während der Polymerisation wird die Temperatur im Kessel auf 110 °C gehalten. Danach wird noch 2 h nachpolymerisiert. Die so erhaltene Acrylatharzlösung hat einen Festkörper von 50 ± 2 %.

Das auf diese Weise erhaltene Polyacrylatharz hat einen Festkörper von 51,2 %, eine Säurezahl von 9.6 gKOH/g, eine Viskosität von 60 dPa·s (original) und eine Hydroxylzahl von ca. 128.

| Vorlage: | |
|---|---|
| 955.5 Teile | Xylol |
| 409.5 Teile | Butylacetat |

| Monomerenzulauf A: | |
|---|---|
| 37.7 Teile | Siloxanmakromonomer AK 5® (Produkt der Marubeni) (40 %ig in Methylethylketon/Toluol) |
| 615 Teile | Methylmethacrylat |
| 225 Teil | Hydroxylethylmethacrylat |
| 630 Teile | n-Butylmethacrylat |
| 15 Teile | Acrylsäure |

| Initiatorzulauf: | |
|---|---|
| 37.5 Teile | tert.-Butylcumylperoxid |
| 150 Teile | Xylol |

### I.4. Herstellung eines polyestermodifizierten Acrvlatharzes

In einem 4-Liter-Polykondensationskessel mit Rührer, dampfbeheizter Kolonne und Wasserabscheider werden 796 Teile Trimethylolpropan, 540 Teile Isononansäure, 821 Teile Phthalsäureanhydrid und 83 Teile Xylol gegeben und langsam aufgeheizt. Es wird bei einer Temperatur von max. 190 °C bis zu einer Säurezahl von 15 mgKOH/g und einer Viskosität 5,3 dPa·s (60 %ig in Xylol) kondensiert. Anschließend wird gekühlt und bei 130°C mit 910 Teilen Shellsol® A angelöst sowie weiter auf Raumtemperatur gekühlt.

Der so erhaltene Polyester hat einen Festkörper von 66,5 %, eine Säurezahl von 13 mg KOH/g, eine (theoretische) OH-Zahl von 104 mg KOH/g und eine Viskosität von 22 dPa·s (original). Das zahlenmittlere Molekulargewicht Mn beträgt 1.241, das gewichtsmittlere Molekulargewicht Mw beträgt 5.843 und die Uneinheitlichkeit Mw/Mn beträgt 4,71 (jeweils gelpermeations-chromatographisch bestimmt gegen Polystyrolstandard).

Die Herstellung des Acrylatcopolymerisats erfolgte in einem 4-Liter-Edelstahlpolymerisationskessel mit Rührer, Rückflußkühler, einem Monomerenzulauf und einem Initiatorzulauf. Die unten angegebenen Komponenten werden in die Vorlage eingewogen und dann die Vorlage auf 165 °C aufgeheizt.

Mit dem Start aller Zuläufe wird gleichzeitig begonnen, innerhalb von 4 h wird der Monomerenzulauf gleichmäßig zudosiert, innerhalb von 5 h wird der Initiatorzulauf gleichmäßig zudosiert. Während der Polymerisation wird die Temperatur im Kessel auf 160 - 165 °C gehalten. Danach wird noch 2 h nachpolymerisiert. Die so erhaltene Acrylatharzlösung hat einen Festkörper von 80 %. Anschließend wird die Temperatur auf 120°C gesenkt und das Acrylatharz mit Butylacetat auf 65 % Festkörper angelöst.

| Vorlage: | |
|---|---|
| 700 Teile | des obenbeschriebenen Polyesterharzes |
| 70 Teile | eines handelsüblichen Vinylesters der Versaticsäure (Handelsprodukt VeoVa 10 ® der Firma Shell Chemie) |

| Monomerenzulauf: | |
|---|---|
| 350 Teile | Styrol |
| 140 Teile | Hydroxyethylmethacrylat und |
| 140 Teile | Methylmethacrylat |

| Initiatorzulauf: | |
|---|---|
| 14 Teile | Di-tert.Butylperoxid, |
| 44 Teile | Shellsol® A (handelsübliches, aromatisches Lösemittelgemisch mit einem Siedebereich von 165 bis 185 °C) und |
| 25 Teile | Xylol |

### II. Herstellung der Beschichtungsmittel E1 bis E3 und V1 bis V3 (Vergleichsbeispiele)

### II.1. Herstellung der Härterlösung

Aus den nachfolgend angegebenen Komponenten werden durch Mischen die Härterlösungen hergestellt:

| | |
|---|---|
| 4 Teile | Katalysatorlösung¹⁾ |
| 50,6 Teile | Desmodur® N 3390²⁾ |
| 10,0 Teile | Solventnaphta® |
| 7,5 Teile | Xylol |
| 1,5 Teile | n-Butylacetat 98/100 |
| 0,6 Teile | Baysilon® Lackadditiv OL44³⁾ |
| 14,0 Teile | 1-Methoxypropylacetat-2 |
| 11,0 Teile | Butylglykolacetat |

| | |
|---|---|
| ¹⁾ unter Punkt II.3. beschriebene Katalysatorlösung | |
| ²⁾ Handelsübliches Polyisocyanat der Firma Bayer AG, eine 90%ige Lösung in Butylacetat/Solventnaphtha 1:1 eines Trimerisats auf Basis Hexamethylendiisocyanat mit einem zahlenmittleren Molekulargewicht von ca. 700, einer durchschnittlichen Funktionalität zwischen 3 und 4 und einem Uretdiongruppengehalt von maximal 5 %; | |
| ³⁾ Handelsübliches Verlaufsmittel auf Basis eines polyethermodifizierten Methylpolysiloxans der Firma Bayer AG | |

### II.2. Herstellung eines Einstellzusatzes

Aus den nachfolgend angegebenen Komponenten wird durch Mischen ein Einstellzusatz hergestellt:

| | |
|---|---|
| Xylol : | 15,0 Teile |
| Solventnaphta® | 13,0 Teile |
| Benzin 135/180 | 10,0 Teile |
| Butylgykolacetat | 3,0 Teile |
| n-Butylacetat 98/100 | 50,0 Teile |
| 1-Methoxypropylacetat-2 | 5,0 Teile |
| Butoxyl | 2,0 Teile |
| Dipentene | 2,0 Teile |

### II.3. Herstellung einer Katalysatorlösung

1,0 Teile Dibutylzinndilaurat werden mit 50 Teilen Butylacetat 98/100 und 49 Teilen Xylol gemischt.

### II.4. Herstellung der Decklacke E1 bis E3 und V1 bis V3

Die Decklacke werden hergestellt, indem 40 Teile der oben beschriebenen Lösung des polyestermodifizierten Polyacrylatharzes und 3 Teile Butylacetat 98/100 vorgelegt und 6 Teile eines handelsüblichen organischen Rotpigments (Handelsprodukt Novopermrot® F2RK 70 der Firma Hoechst) zugegeben werden. Nun wird zunächst 10 min bei 2000 Umdrehungen/min dissolvert und anschließend unter Kühlung 180 min bei 4000 Umdrehungen/min auf eine Kornfeinheit nach Hegmann von < 10 µm vermahlen. Danach wird eine Mischung aus 4 Teilen Butylacetat 98/100, 20 Teilen des obenbeschriebenen hydroxylgruppenhaltigen Acrylatharzes E1 bis E3 bzw. V1 bis V3, 0,5 Teile eines handelsüblichen Lichtschutzmittels auf Basis eines sterisch gehinderten Amins (Handelsprodukt Tinuvin 292 der Firma Ciba Geigy), 0,5 Teile der obenbeschriebenen Katalysatorlösung und 26 Teile der oben beschriebenen Lösung des polyestermodifizierten Polyacrylatharzes zugegeben und mit einem Rührer (1000 Umdrehungen/min) homogenisiert.

Zur Herstellung der Decklacke werden jeweils 4 Vol.-Teile der so erhaltenen Mischung mit 1 Vol.-Teil der obenbeschriebenen Härterlösung und 1 Vol.-Teil des obenbeschriebenen Einstellzusatzes gemischt.

### II.5. Applikation der Decklacke

Der so erhaltene Decklack wird dann nach einer Ruhezeit von mindestens 16 h auf phosphatierte und gefüllerte Stahlbleche appliziert. Die phosphatierten Stahlbleche werden hierzu mit einem handelsüblichen konventionellen Füller (Handelsprodukt Glasurit Grundfüller 283-1874 der Firma Glasurit GmbH, Münster) auf Basis eines epoxidgruppenhaltigen Bindemittels und eines aminofunktionellen Härters beschichtet und lh bei Raumtemperatur zwischengetrocknet. Danach wird der Decklack in 2 Spritzgängen mit einer Zwischenablüftzeit von 15 min appliziert und 16 h bei 20°C getrocknet. Die Trockenfilmschichtdicke beträgt 50 bis 60 µm.

Die so beschichteten Bleche werden dann verschiedenen Prüfungen unterzogen. Die Prüfergebnisse sind in der Tabelle 3 dargestellt.

### II.6 Herstellung von Klarlacken

Die erfindungsgemäßen Bindemittel sind auch in Klarlackbeschichtungssystemen eingesetzt worden.

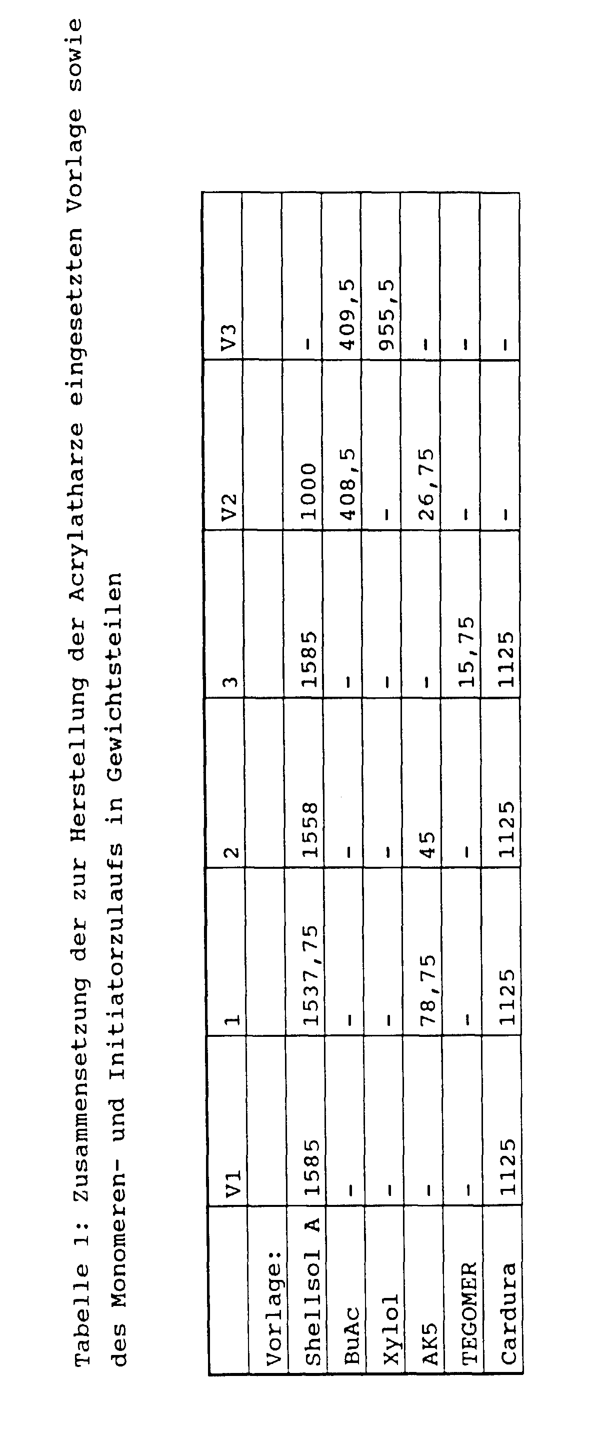

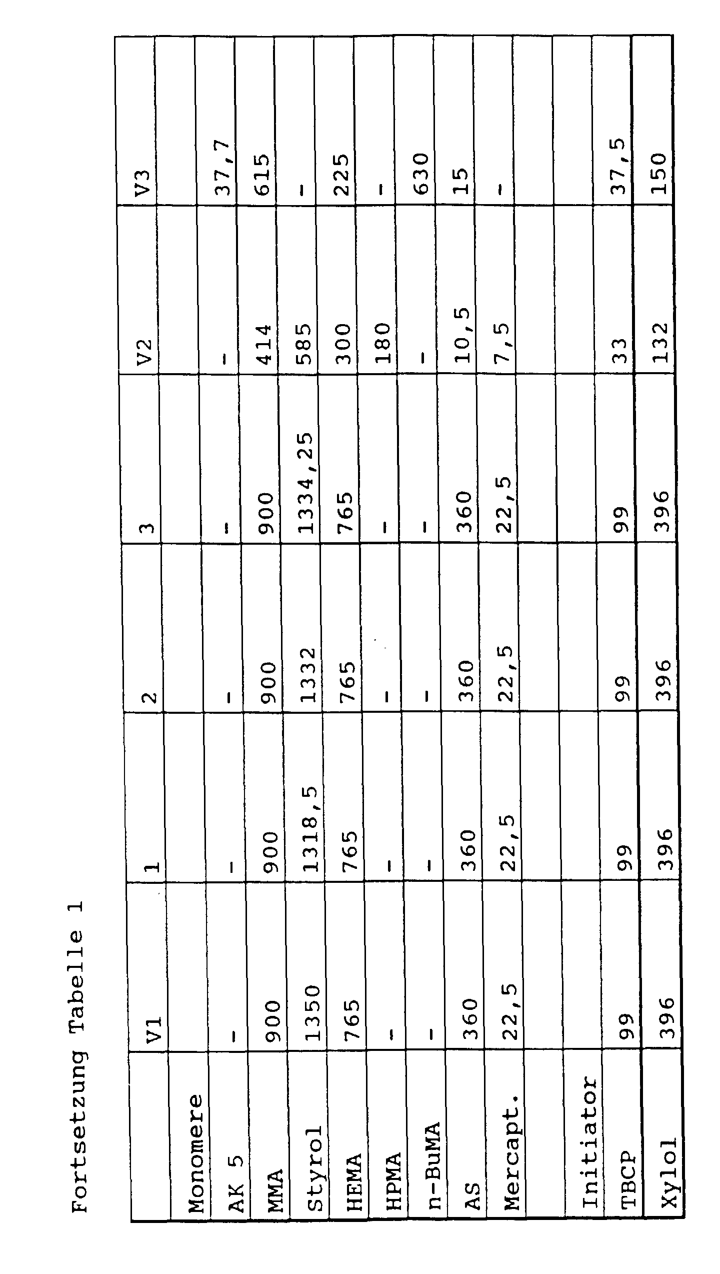

### Erläuterungen zu Tabelle 1

Cardura® E 10 = handelsüblicher Glycidylester der Versaticsäure

AK 5 = Handelsprodukt Siloxanmakromonomer AK 5 der Firma Marubeni, ein α,ω-acryloxyorganofunktionelles Polysiloxanmakromonomer mit 0,5 bis 1,5, im Mittel mit einer Methacryloylendgruppe und mit einem zahlenmittleren Molekulargewicht von 5.000.

TEGOMER® = TEGOMER® E-Si 2530 der Firma Th. Goldschmidt, handelsübliches α,ω-glycidylorganofunktionelles Polydimethylsiloxan der Formel 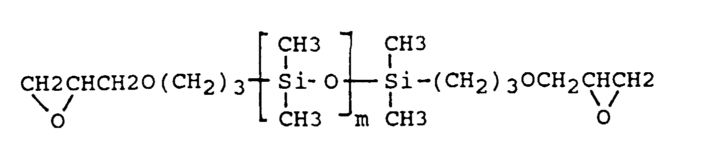 mit
m = 50 und einem Epoxyäquivalentgewicht von 1900
HEMA = Hydroxyethylmethacrylat
HPMA = Hydroxypropylmethacrylat
MMA = Methylmethacrylat
AS = Acrylsäure
n-BuMA = n-Butylmethacrylat
BuAc = Butylacetat
Mercapt. = Mercaptoethanol
TBCP = tert.-Butylcumylperoxid

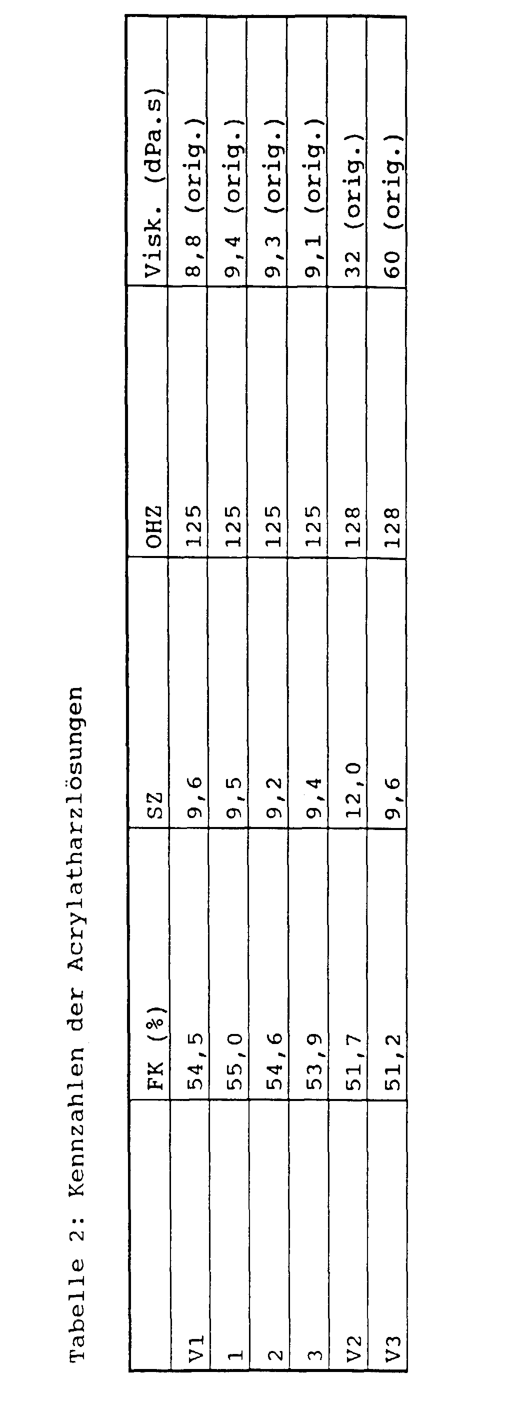

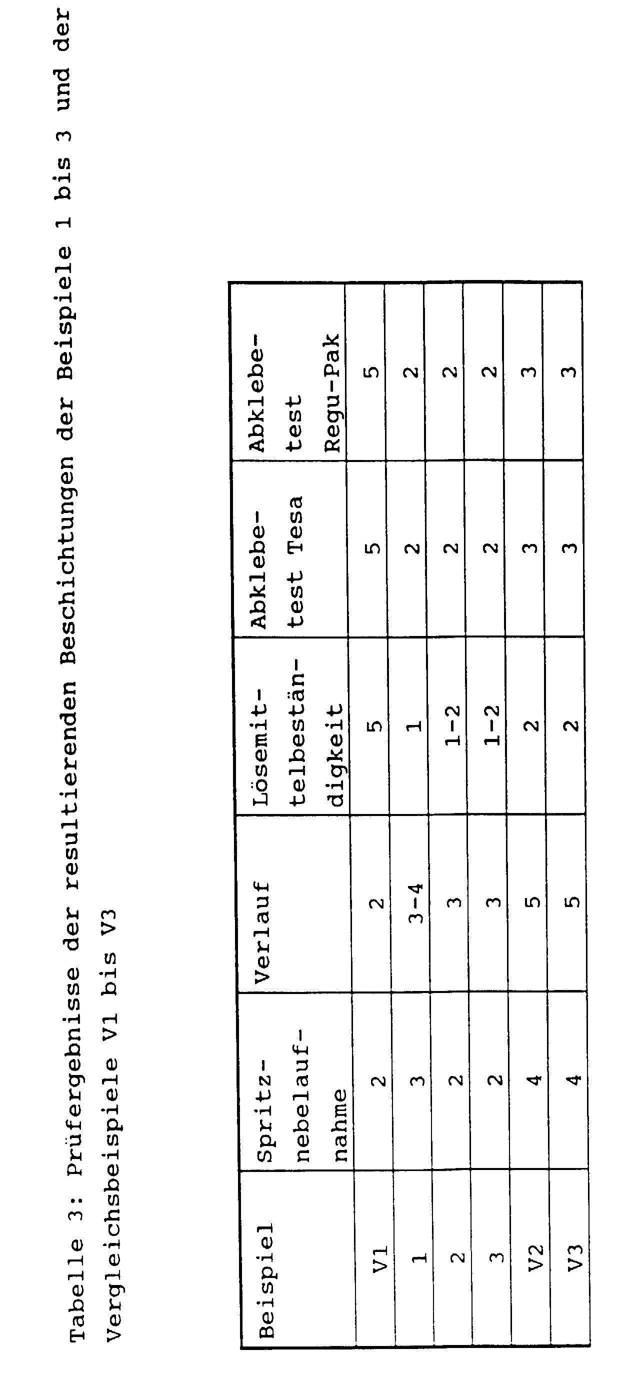

### Erläuterungen zu Tabelle 3

### Beschreibung der anzuwendenden Prüfmethoden:

### Oberflächentrocknung-Abklebetest

Der Decklack wird nach Applikationsanweisung (2 Spritzgänge mit einer Zwischenablüftzeit von 5 min., Trockenfilmdicke: 50-60 µm) auf eine vorbereitete (gefüllerte) Stahlblechtafel (60cm x 50cm) appliziert.
Nach Trocknung 16 h bei 20°C wird ein Streifen Tesakrepp (5cm breit) und eine "Regupak"-Beschriftungsfolie aufgelegt.

Für ein definiertes Anpressen wird der Tesakreppstreifen mit der Anpreßrolle zweimal übergerollt und die "Regupak"-Folie blasenfrei von Hand angepreßt.

Ein Stück Tesakrepp bzw. Folie wird nach 1h, 3h, 6h und 24h entfernt und sofort sowie nach 60 min. die Markierung auf der Lackoberfläche beurteilt.

| Auswertung: | |
|---|---|
| Markierung | Kennzahl nach DIN 53 230 |
| nicht markiert | 0 |
| sehr leicht markiert | 1 |
| leicht markiert | 2 |
| markiert | 3 |
| stark markiert | 4 |
| sehr stark markiert | 5 |

### Verlauf

Prüftafeln werden siehe Beschreibung Abklebetest präpariert und visuell ausgewertet.

| Verlauf | Kennzahl nach DIN 53 230 |
|---|---|
| ausgezeichnet | 0 |
| sehr gut | 1 |
| gut | 2 |
| mäßig | 3 |
| schlecht | 4 |
| sehr schlecht | 5 |

### Spritznebelaufnahme

Verwendung von Spachteltafeln mit 6 Bohrungen mit einem Durchmesser von 8 mm im mittleren Bereich der Tafel.

Der Decklack wird nach zwei konventionell applizierten Spritzgängen ein drittes Mal keilförmig von links nach rechts, d.h. links - dickschichtiger Auftrag, rechts - dünnschichtiger Auftrag, eingespritzt. Nach 30 min. wird in die rechte Hälfte der Tafel eingenebelt. Während des Spritzauftrags und während der Trocknung hängen die Tafeln senkrecht.

Zur Auswertung befinden sich die Spachteltafeln auf einer geneigten Haltevorrichtung in einem Winkel von 30°.

### Beurteilung der rechten Seite, visuell:

| Spritznebelaufnahme | Kennzahl nach DIN 53 230 |
|---|---|
| ausgezeichnet | 0 |
| sehr gut | 1 |
| gut | 2 |
| mäßig | 3 |
| schlecht | 4 |
| sehr schlecht | 5 |

### Lösemittel-Beständigkeit:

Prüftafeln werden siehe Beschreibung Abklebetest präpariert.

Es wird ein Papiertuch mit Lösemittel getränkt und mit 10 Doppelhüben und leichtem Andruck über die Oberfläche gewischt. Danach wird die Fläche mit einem separaten Tuch getrocknet und sofort die Vermattung visuell beurteilt.

| Auswertung: | |
|---|---|
| Vermattung | Kennzahl nach DIN 53 230 |
| ausgezeichnet | 0 |
| sehr gut | 1 |
| gut | 2 |
| mäßig | 3 |
| schlecht | 4 |
| sehr schlecht | 5 |

### Zusammenfassung der Prüfergebnisse:

Die Spritznebelaufnahme ist bei den erfindungsgemäßen Beispielen und im nicht siloxan-modifizierten Vergleichsbeispiel akzeptabel; eine Verbesserung der Spritznebelaufnahme läßt sich aber mit sinkendem Siloxangehalt beobachten. Die Vergleichsbeispiele V2 und V3 sind in ihrer Spritznebelaufnahme nicht akzeptabel.
Der Verlauf ist ab einer Note >3 in der Praxis nicht mehr akzeptabel, was die Beschichtungsmittel auf Basis V2 und V3 für eine Anwendung ausschließt. Es ist weiterhin auch festzustellen, daß der Verlauf mit zunehmendem Siloxananteil schlechter wird. Das erfindungsgemäße Beschichtungsmittel auf Basis El ist trotz schlechten Verlaufs aufgrund der besonders guten Lösemittelbeständigkeit noch bedingt einsetzbar.

Die Lösemittelbeständigkeit der Beschichtungen ist nur bei einer Beurteilung ≤2 anforderungsgemäß. Hier erfüllen alle Beispiele mit Ausnahme des nicht siloxan-modifizierten Bindemittels V1 die Anforderungen. Bei einer Note >2 sind Vermattungserscheinungen der resultierenden Beschichtungsmittel zu beobachten.

Als wichtigstes Beurteilungskriterium der geprüften Beschichtungen muß der Abklebtest angesehen werden. Für akzeptable Beschichtungen muß die Bewertung ≤ 2 - 3 betragen. Während die auf V1 basierende Beschichtung eine völlig unzureichende und die auf den Vergleichsbeispielen V2 und V3 basierenden Beschichtungen eine unzureichende Abklebebeständigkeit aufweisen, führt die Verwendung der erfindungsgemäßen Bindemittel zu einer guten Abklebebeständigkeit.

## Patentansprüche

1. Beschichtungsmittel, enthaltend
(A) mindestens ein hydroxylgruppenhaltiges Polyacrylatharz und
(B) mindestens ein Isocyanatvernetzungsmittel,
dadurch gekennzeichnet, daß das Polyacrylatharz (A) erhältlich ist, indem in einem organischen Lösemittel oder Lösemittelgemisch und in Gegenwart mindestens eines Polymerisationsinitiators
(a1) ein von (a2), (a3), (a5), (a6) und (a7) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,
(a2) ein mit (a1), (a3), (a4), (a5), (a6) und (a7) copolymerisierbares, von (a3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(a3) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
(a4) ggf. ein mindestens eine Carboxylgruppe pro Molekül tragendes, mit (a1), (a2), (a3), (a5), (a6) und (a7) copolymerisierbares, ethylenisch ungesättigtes Monomer oder ein Gemisch aus solchen Monomeren,
(a5) ein Polysiloxanmakromonomer mit einem zahlenmittleren Molekulargewicht von 1.000 bis 40.000 und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Monomeren,
(a6) ein vinylaromatischer Kohlenwasserstoff oder ein Gemisch aus solchen Monomeren und
(a7) ggf. ein mit (a1), (a2), (a3), (a4), (a5) und (a6) copolymerisierbares, von (a1), (a2), (a3), (a5) und (a6) verschiedenes, im wesentlichen carboxylgruppenfreies, ethylenisch ungesättigtes Monomer oder ein Gemisch aus solchen Monomeren
polymerisiert werden, wobei (a1), (a2), (a3), (a4), (a5), (a6) und (a7) in Art und Menge so ausgewählt werden, daß das Polyacrylatharz (A) die gewünschte OH-Zahl und Säurezahl aufweist und wobei die Menge an Komponente (a5) weniger als 5 Gew.-%, bezogen auf das Gesamtgewicht der zur Herstellung des Polyacrylatharzes (A) eingesetzten Monomeren, beträgt.

2. Beschichtungsmittel, enthaltend
(A) mindestens ein hydroxylgruppenhaltiges Polyacrylatharz,
(B) mindestens ein Isocyanatvernetzungsmittel und
(C) mindestens ein weiteres hydroxylgruppenhaltiges, polyestermodifiziertes Polyacrylatharz
dadurch gekennzeichnet, daß das Polyacrylatharz (A) erhältlich ist, indem in einem organischen Lösemittel oder Lösemittelgemisch und in Gegenwart mindestens eines Polymerisationsinitiators
(a1) ein von (a2), (a3), (a5), (a6) und (a7) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,
(a2) ein mit (a1), (a3), (a4), (a5), (a6) und (a7) copolymerisierbares, von (a3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(a3) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
(a4) ggf. ein mindestens eine Carboxylgruppe pro Molekül tragendes, mit (a1), (a2), (a3), (a5), (a6) und (a7) copolymerisierbares, ethylenisch ungesättigtes Monomer oder ein Gemisch aus solchen Monomeren,
(a5) ein Polysiloxanmakromonomer mit einem zahlenmittleren Molekulargewicht von 1.000 bis 40.000 und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Monomeren,
(a6) ein vinylaromatischer Kohlenwasserstoff oder ein Gemisch aus solchen Monomeren und
(a7) ggf. ein mit (a1), (a2), (a3), (a4), (a5) und (a6) copolymerisierbares, von (a1), (a2), (a3), (a5) und (a6) verschiedenes, im wesentlichen carboxylgruppenfreies, ethylenisch ungesättigtes Monomer oder ein Gemisch aus solchen Monomeren
polymerisiert werden, wobei (a1), (a2), (a3), (a4), (a5), (a6) und (a7) in Art und Menge so ausgewählt werden, daß das Polyacrylatharz (A) die gewünschte OH-Zahl und Säurezahl aufweist und wobei die Menge an Komponente (a5) weniger als 5 Gew.-%, bezogen auf das Gesamtgewicht der zur Herstellung des Polyacrylatharzes (A) eingesetzten Monomeren, beträgt.

3. Beschichtungsmittel nach Anspruch 1 oder 2, dadurch gekennzeichnet, daß die Menge an Komponente (a5) weniger als 3 Gew.-%, bevorzugt 0,1 bis 1,0 Gew.-%, besonders bevorzugt 0,3 bis 0,7 Gew.-%, jeweils bezogen auf das Gesamtgewicht der zur Herstellung des Polyacrylatharzes (A) eingesetzten Monomeren, beträgt.

4. Beschichtungsmittel nach einem der Ansprüche 1 bis 4, dadurch gekennzeichnet, daß das Polyacrylatharz (A) hergestellt worden ist unter Verwendung eines oder mehrerer Poly-siloxanmakromonomerer (a5) der folgenden Formel (I) 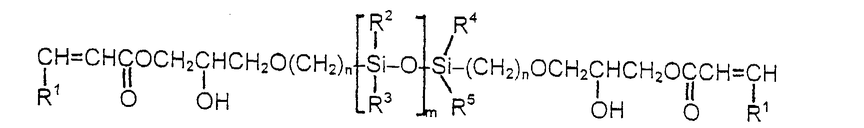 mit
R¹ = H oder CH₃
R₂, R₃, R₄, R₅ = gleiche oder verschiedene aliphatische Kohlenwasserstoffreste mit 1 bis 8 C-Atomen, insbesondere Methyl, oder Phenylrest
n = 2 bis 5, bevorzugt 3
m = 8 bis 80
oder unter Verwendung eines oder mehrerer Polysiloxanmakromonomerer (a5) der folgenden Formel (II) 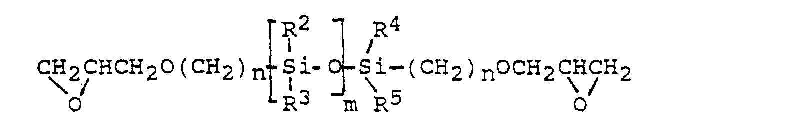 mit
R², R³, R⁴, R⁵ = gleiche oder verschiedene aliphatische Kohlenwasserstoffreste mit 1 bis 8 C-Atomen, insbesondere Methyl, oder Phenylrest.
n = 2 bis 5, bevorzugt 3
m = 8 bis 50.

5. Beschichtungsmittel nach Anspruch 4, dadurch gekennzeichnet, daß das Polyacrylatharz (A) hergestellt worden ist unter Verwendung eines oder mehrerer Polysiloxanmakromonomerer (a5) der folgenden Formel 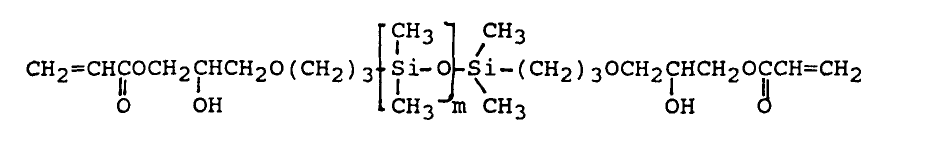 mit m ≈ 30 bis 50 oder unter Verwendung eines oder mehrerer Polysiloxanmakromonomerer (a5) der folgenden Formel 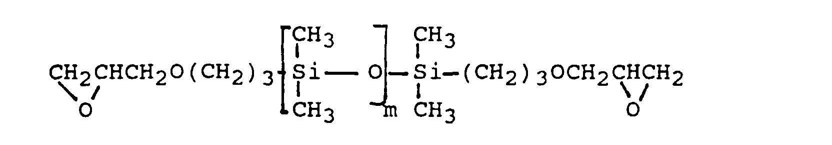 mit m = 50 und einem Epoxyäquivalentgewicht von 1900.

6. Beschichtungsmittel nach einem der Ansprüche 1 bis 3, dadurch gekennzeichnet, daß das Polyacrylatharz (A) hergestellt worden ist unter Verwendung eines Polysiloxanmakromonomeren (a5) mit 0,5 bis 1,5, im Mittel mit einer Methacryloylendgruppe und mit einem zahlenmittleren Molekulargewicht von 5.000.

7. Beschichtungsmittel nach einem der Ansprüche 1 bis 6, dadurch gekennzeichnet, daß das Polyacrylatharz (A) hergestellt worden ist durch Polymerisation von
a1) 5 bis 74 Gew.-%, bevorzugt 5 bis 30 Gew.-%, der Komponente (a1),
(a2) 10 bis 40 Gew.-%, bevorzugt 15 bis 25 Gew.-%, der Komponente (a2),
(a3) 10 bis 50 Gew.-%, bevorzugt 15 bis 40 Gew.-%, der Komponente (a3),
(a4) 0 bis 10 Gew.-%, bevorzugt 0,1 bis 6 Gew.-%, der Komponente (a4),
(a5) weniger als 5 Gew.-%, bevorzugt 0,1 bis 1 Gew.-% und besonders bevorzugt 0,3 bis 0,7, der Komponente (a5),
(a6) 5 bis 40 Gew.-%, bevorzugt 10 bis 30 Gew.-%, der Komponente (a6) und
(a7) 0 bis 40 Gew.-%, bevorzugt 0 bis 30 Gew.-%, der Komponente (a7),
wobei die Summe der Gewichtsanteile der Komponenten (a1) bis (a7) jeweils 100 Gew.-% beträgt.

8. Verfahren zur Herstellung der Beschichtungsmittel gemäß einem der Ansprüche 1 bis 7, dadurch gekennzeichnet, daß das Polyacrylatharz (A), das Isocyanatvernetzungsmittel (B), ggf. das hydroxylgruppenhaltige, polyestermodifizierte Polyacrylatharz (C), ein oder mehrere organische Lösemittel, ggf. Pigmente und/oder Füllstoffe sowie ggf. weitere Hilfs- und Zusatzstoffe gemischt und ggf. dispergiert werden.

9. Verfahren zur Herstellung eines mehrschichtigen schützenden und/oder dekorativen Überzuges auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der
(A) ein hydroxylgruppenhaltiges Polyacrylatharz,
(B) ein Vernetzungsmittel sowie ggf.
(C) ein hydroxylgruppenhaltiges, polyestermodifiziertes Polyacrylatharz
enthält, aufgebracht wird und anschließend
(4) Basislackschicht und Decklackschicht zusammen gehärtet werden,
dadurch gekennzeichnet, daß als Decklack ein Beschichtungsmittel nach einem der Ansprüche 1 bis 7 eingesetzt wird.

10. Verwendung der Beschichtungsmittel gemäß einem der Ansprüche 1 bis 7 als Klarlack oder insbesondere als pigmentierter Decklack, insbesondere im Bereich der Autoreparaturlackierung.

## Claims

1. Coating composition comprising
(A) at least one hydroxyl-containing polyacrylate resin and
(B) at least one isocyanate crosslinking agent,
characterized in that the polyacrylate resin (A) is obtainable by polymerizing, in an organic solvent or solvent mixture and in the presence of at least one polymerization initiator,
(a1) an essentially carboxyl-free (meth)acrylic ester which is different from (a2), (a3), (a5), (a6) and (a7) and is copolymerizable with (a2), (a3), (a4), (a5), and (a6), or a mixture of such monomers,
(a2) an ethylenically unsaturated monomer which carries at least one hydroxyl group per molecule and is essentially carboxyl-free, and is copolymerizable with (a1), (a3), (a4), (a5), (a6) and (a7) and is different from (a3), or a mixture of such monomers,
(a3) at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid which then, during or after the polymerization reaction, is reacted with the glycidyl ester of an α-branched monocarboxylic acid having 5 to 18 carbon atoms per molecule,
(a4) if desired, an ethylenically unsaturated monomer which carries at least one carboxyl group per molecule and is copolymerizable with (a1), (a2), (a3), (a5), (a6) and (a7), or a mixture of such monomers,
(a5) a polysiloxane macromonomer having a number-average molecular weight of from 1000 to 40,000 and on average from 0.5 to 2.5 ethylenically unsaturated double bonds per molecule or having on average from 0.5 to 2.5 epoxide groups per molecule, or a mixture of such monomers,
(a6) an aromatic vinyl hydrocarbon, or a mixture of such monomers, and
(a7) if desired, an essentially carboxyl-free, ethylenically unsaturated monomer which is copolymerizable with (a1), (a2), (a3), (a4), (a5) and (a6) and is different from (a1), (a2), (a3), (a5) and (a6), or a mixture of such monomers,
the nature and quantity of (a1), (a2), (a3), (a4), (a5), (a6) and (a7) being selected such that the polyacrylate resin (A) has the desired OH number and acid number, and the quantity of component (a5) being less than 5 % by weight, based on the overall weight of the monomers employed in preparing the polyacrylate resin (A).

2. Coating composition comprising
(A) at least one hydroxyl-containing polyacrylate resin,
(B) at least one isocyanate crosslinking agent and
(C) at least one further hydroxyl-containing, polyester-modified polyacrylate resin,
characterized in that the polyacrylate resin (A) is obtainable by polymerizing, in an organic solvent or solvent mixture and in the presence of at least one polymerization initiator,
(a1) an essentially carboxyl-free (meth)acrylic ester which is different from (a2), (a3), (a5), (a6) and (a7) and is copolymerizable with (a2), (a3), (a4), (a5), and (a6), or a mixture of such monomers,
(a2) an ethylenically unsaturated monomer which carries at least one hydroxyl group per molecule and is essentially carboxyl-free, and is copolymerizable with (a1), (a3), (a4), (a5), (a6) and (a7) and is different from (a3), or a mixture of such monomers,
(a3) at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid which then, during or after the polymerization reaction, is reacted with the glycidyl ester of an α-branched monocarboxylic acid having 5 to 18 carbon atoms per molecule,
(a4) if desired, an ethylenically unsaturated monomer which carries at least one carboxyl group per molecule and is copolymerizable with (a1), (a2), (a3), (a5), (a6) and (a7), or a mixture of such monomers,
(a5) a polysiloxane macromonomer having a number-average molecular weight of from 1000 to 40,000 and on average from 0.5 to 2.5 ethylenically unsaturated double bonds per molecule or having on average from 0.5 to 2.5 epoxide groups per molecule, or a mixture of such monomers,
(a6) an aromatic vinyl hydrocarbon, or a mixture of such monomers, and
(a7) if desired, an essentially carboxyl-free, ethylenically unsaturated monomer which is copolymerizable with (a1), (a2), (a3), (a4), (a5) and (a6) and is different from (a1), (a2), (a3), (a5) and (a6), or a mixture of such monomers,
the nature and quantity of (a1), (a2), (a3), (a4), (a5), (a6) and (a7) being selected such that the polyacrylate resin (A) has the desired OH number and acid number, and the quantity of component (a5) being less than 5 % by weight, based on the overall weight of the monomers employed in preparing the polyacrylate resin (A).

3. Coating composition according to Claim 1 or 2, characterized in that the quantity of component (a5) is less than 3 % by weight, preferably from 0.1 to 1.0 % by weight, particularly preferably from 0.3 to 0.7 % by weight, based in each case on the overall weight of the monomers employed in preparing the polyacrylate resin (A).

4. Coating composition according to one of Claims 1 to 3, characterized in that the polyacrylate resin (A) has been prepared using one or more polysiloxane macromonomers (a5) of the following formula (I) 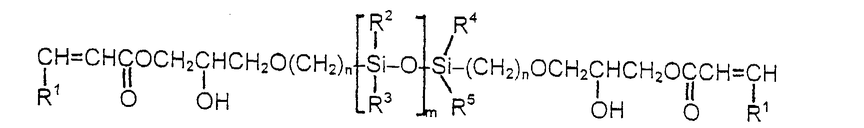 where
R¹ = H or CH₃
R₂, R₃, R₄, R₅ = identical or different aliphatic hydrocarbon radicals having 1 to 8 carbon atoms, especially methyl, or phenyl radical
n = from 2 to 5, preferably 3
m = from 8 to 80
or using one or more polysiloxane macromonomers (a5) of the following formula (II) 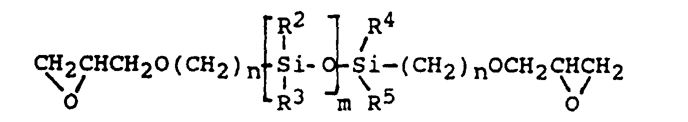 where
R², R³, R⁴, R⁵ = identical or different aliphatic hydrocarbon radicals having 1 to 8 carbon atoms, especially methyl, or phenyl radical.
n = from 2 to 5, preferably 3
m = from 8 to 50.

5. Coating composition according to Claim 4, characterized in that the polyacrylate resin (A) has been prepared using one or more polysiloxane macromonomers (a5) of the following formula 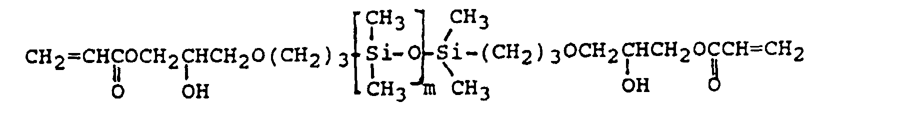 where m ≈ from 30 to 50 or using one or more polysiloxane macromonomers (a5) of the following formula 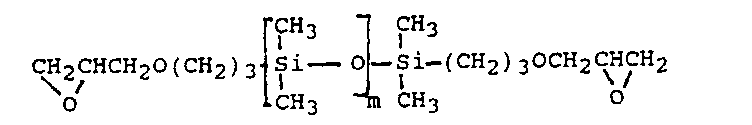 where m = 50 and having an epoxy equivalent weight of 1900.

6. Coating composition according to one of Claims 1 to 3, characterized in that the polyacrylate resin (A) has been prepared using a polysiloxane macromonomer (a5) having from 0.5 to 1.5, on average having one methacryloyl end group and having a number-average molecular weight of 5000.

7. Coating composition according to one of Claims 1 to 6, characterized in that the polyacrylate resin (A) has been prepared by polymerizing
a1) from 5 to 74 % by weight, preferably from 5 to 30 % by weight, of component (a1),
(a2) from 10 to 40 % by weight, preferably from 15 to 25 % by weight, of component (a2),
(a3) from 10 to 50 % by weight, preferably from 15 to 40 % by weight, of component (a3),
(a4) from 0 to 10 % by weight, preferably from 0.1 to 6 % by weight, of component (a4),
(a5) less than 5 % by weight, preferably from 0.1 to 1 % by weight and particularly preferably from 0.3 to 0.7 [lacuna], of component (a5),
(a6) from 5 to 40 % by weight, preferably from 10 to 30 % by weight, of component (a6) and
(a7) from 0 to 40 % by weight, preferably from 0 to 30 % by weight, of component (a7),
the sum of the proportions by weight of components (a1) to (a7) being in each case 100 % by weight.

8. Process for the preparation of the coating compositions according to one of Claims 1 to 7, characterized in that the polyacrylate resin (A), the isocyanate crosslinking agent (B), if desired the hydroxyl-containing, polyester-modified polyacrylate resin (C), one or more organic solvents, if desired pigments and/or fillers and also, if desired, further auxiliaries and additives are mixed and, if desired, dispersed.

9. Process for the production of a multilayer protective and/or decorative coating on a substrate surface, in which
(1) a pigmented basecoat is applied to the substrate surface,
(2) a polymer film is formed from the basecoat applied in step (1),
(3) a transparent topcoat comprising
(A) a hydroxyl-containing polyacrylate resin
(B) a crosslinking agent and
(C) a hydroxyl-containing, polyester-modified polyacrylate resin
is applied to the basecoat thus obtained, and subsequently
(4) basecoat and topcoat are cured together,
characterized in that a topcoat employed is a coating composition according to one of Claims 1 to 7.

10. Use of the coating compositions according to one of Claims 1 to 7 as a clearcoat or, in particular, as a pigmented topcoat, especially in the area of automotive refinishing.

## Revendications

1. Composition de revêtement contenant
(A) au moins une résine de polyacrylate renfermant des groupes hydroxy et
(B) au moins un agent de réticulation isocyanate,
caractérisée en ce que la résine de polyacrylate (A) peut être obtenue en polymérisant, dans un solvant organique ou un mélange de solvants organiques et en présence d'au moins un amorceur de polymérisation,
(a1) un ester (méth)acrylique essentiellement dépourvu de groupe carboxy, copolymérisable avec (a2), (a3) , (a4), (a5) et (a6) et différent de (a2) , (a3), (a5), (a6) et (a7), ou un mélange de tels monomères,
(a2) un monomère éthyléniquement insaturé copolymérisable avec (a1), (a3), (a4), (a5), (a6) et (a7), différent de (a3), qui renferme au moins un groupe hydroxy par molécule et est essentiellement dépourvu de groupe carboxy, ou un mélange de tels monomères,
(a3) au moins un produit de réaction de l'acide acrylique et/ou de l'acide méthacrylique avec l'ester glycidylique d'un acide monocarboxylique ramifié en position α ayant de 5 à 18 atomes de carbone par molécule, ou à la place du produit de réaction, une quantité équivalente d'acide acrylique et/ou méthacrylique, qui est alors mise à réagir, durant ou après la réaction de polymérisation, avec l'ester glycidylique d'un acide monocarboxylique ramifié en position α ayant de 5 à 18 atomes de carbone par molécule,
(a4) éventuellement un monomère éthyléniquement insaturé copolymérisable avec (a1), (a2), (a3), (a5), (a6) et (a7) renfermant au moins un groupe carboxy par molécule, ou un mélange de tels monomères,
(a5) un macromonomère polysiloxane ayant un poids moléculaire moyen en nombre de 1 000 à 40 000 et en moyenne de 0,5 à 2,5 doubles liaisons éthyléniquement insaturées par molécule ou ayant en moyenne de 0,5 à 2,5 groupes époxy par molécule, ou un mélange de tels monomères,
(a6) un hydrocarbure vinylaromatique ou un mélange de tels monomères, et
(a7) éventuellement un monomère éthyléniquement insaturé essentiellement dépourvu de groupe carboxy, différent de (a1), (a2), (a3), (a5) et (a6) et copolymérisable avec (a1), (a2), (a3), (a4) , (a5) et (a6), ou un mélange de tels monomères,
la nature et la quantité de (a1), (a2), (a3), (a4) , (a5), (a6) et (a7) étant choisies de telle sorte que la résine de polyacrylate (A) présente l'indice OH et l'indice d'acide souhaités, et la quantité du composant (a5) étant inférieure à 5% en poids, par rapport au poids total des monomères utilisés pour la préparation de la résine de polyacrylate (A).

2. Composition de revêtement contenant
(A) au moins une résine de polyacrylate renfermant des groupes hydroxy,
(B) au moins un agent de réticulation isocyanate et
(C) au moins une autre résine de polyacrylate polyester-modifiée, renfermant des groupes hydroxy,
caractérisée en ce que la résine de polyacrylate (A) peut être obtenue en polymérisant, dans un solvant organique ou un mélange de solvants organiques et en présence d'au moins un amorceur de polymérisation,
(a1) un ester (méth)acrylique essentiellement dépourvu de groupe carboxy, copolymérisable avec (a2), (a3), (a4), (a5) et (a6) et différent de (a2), (a3) , (a5), (a6) et (a7), ou un mélange de tels monomères,
(a2) un monomère éthyléniquement insaturé copolymérisable avec (a1), (a3), (a4), (a5), (a6) et (a7), différent de (a3), qui renferme au moins un groupe hydroxy par molécule et est essentiellement dépourvu de groupe carboxy, ou un mélange de tels monomères,
(a3) au moins un produit de réaction de l'acide acrylique et/ou de l'acide méthacrylique avec l'ester glycidylique d'un acide monocarboxylique ramifié en position a ayant de 5 à 18 atomes de carbone par molécule, ou à la place du produit de réaction, une quantité équivalente d'acide acrylique et/ou méthacrylique, qui est alors mise à réagir, durant ou après la réaction de polymérisation, avec l'ester glycidylique d'un acide monocarboxylique ramifié en position a ayant de 5 à 18 atomes de carbone par molécule,
(a4) éventuellement un monomère éthyléniquement insaturé copolymérisable avec (a1), (a2), (a3), (a5), (a6) et (a7) renfermant au moins un groupe carboxy par molécule, ou un mélange de tels monomères,
(a5) un macromonomère polysiloxane ayant un poids moléculaire moyen en nombre de 1 000 à 40 000 et en moyenne de 0,5 à 2,5 doubles liaisons éthyléniquement insaturées par molécule ou ayant en moyenne de 0,5 à 2,5 groupes époxy par molécule, ou un mélange de tels monomères,
(a6) un hydrocarbure vinylaromatique ou un mélange de tels monomères, et
(a7) éventuellement un monomère éthyléniquement insaturé essentiellement dépourvu de groupe carboxy, différent de (a1), (a2), (a3) , (a5) et (a6) et copolymérisable avec (a1), (a2), (a3), (a4), (a5) et (a6), ou un mélange de tels monomères,
la nature et la quantité de (a1), (a2), (a3), (a4), (a5), (a6) et (a7) étant choisies de telle sorte que la résine de polyacrylate (A) présente l'indice OH et l'indice d'acide souhaités, et la quantité du composant (a5) étant inférieure à 5% en poids, par rapport au poids total des monomères utilisés pour la préparation de la résine de polyacrylate (A).

3. Composition de revêtement selon la revendication 1 ou 2, caractérisée en ce que la quantité de composant (a5) est inférieure à 3% en poids, de préférence de 0,1 à 1,0% en poids, particulièrement préférablement de 0,3 à 0,7% en poids, dans chaque cas par rapport au poids total des monomères utilisés pour la préparation de la résine de polyacrylate (A).

4. Composition de revêtement selon l'une quelconque des revendications 1 à 3, caractérisée en ce que la résine de polyacrylate (A) a été préparée en utilisant un ou plusieurs macromonomères polysiloxane (a5) de formule (I) suivante 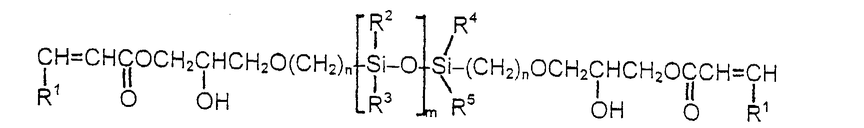 avec
R₁ = H ou CH₃
R₂, R₃, R₄, R₅ = des radicaux hydrocarbonés aliphatiques, identiques ou différents, ayant de 1 à 8 atomes de carbone, en particulier un méthyle, ou un radical phényle
n = 2 à 5, de préférence 3
m = 8 à 80,
ou en utilisant un ou plusieurs macromonomères polysiloxane (a5) de formule (II) suivante 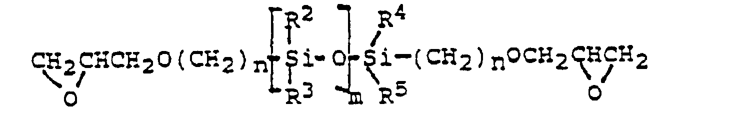 avec
R², R³, R⁴, R⁵ = des radicaux hydrocarbonés aliphatiques, identiques ou différents ayant de 1 à 8 atomes de carbone, en particulier un méthyle, ou un radical phényle,
n = 2 à 5, de préférence 3
m = 8 à 50.

5. Composition de revêtement selon la revendication 4, caractérisée en ce que la résine de polyacrylate (A) a été préparée en utilisant un ou plusieurs macromonomères polysiloxane (a5) de formule suivante 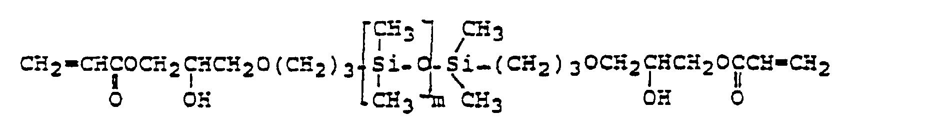 avec m ≈ 30 à 50, ou en utilisant un ou plusieurs macromonomères polysiloxane (a5) de formule suivante 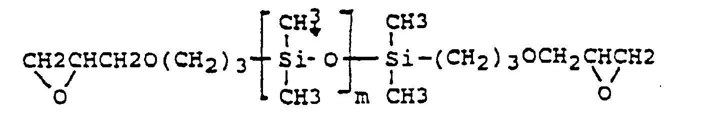 avec m = 50 et un poids équivalent en époxy de 1 900.

6. Composition de revêtement selon l'une quelconque des revendications 1 à 3, caractérisée en ce que la résine de polyacrylate (A) a été préparée en utilisant un macromonomère polysiloxane (a5) ayant de 0,5 à 1,5, en moyenne ayant un groupe terminal méthacryloyle et ayant un poids moléculaire moyen en nombre de 5 000.

7. Composition de revêtement selon l'une quelconque des revendications 1 à 6, caractérisée en ce que la résine de polyacrylate (A) a été préparée en polymérisant
a1) de 5 à 74% en poids, de préférence de 5 à 30% en poids, du composant (a1),
(a2) de 10 à 40% en poids, de préférence de 15 à 25% en poids, du composant (a2),
(a3) de 10 à 50% en poids, de préférence de 15 à 40% en poids, du composant (a3),
(a4) de 0 à 10% en poids, de préférence de 0,1 à 6% en poids, du composant (a4),
(a5) moins de 5% en poids, de préférence de 0,1 à 1% en poids et particulièrement préférablement de 0,3 à 0,7% en poids, du composant (a5),
(a6) de 5 à 40% en poids, de préférence de 10 à 30% en poids, du composant (a6), et
(a7) de 0 à 40% en poids, de préférence de 0 à 30% en poids, du composant (a7),
la somme des proportions pondérales des composants (a1) à (a7) étant dans chaque cas de 100% en poids.

8. Procédé de préparation des compositions de revêtements selon l'une quelconque des revendications 1 à 7, caractérisé en ce que la résine de polyacrylate (A) , l'agent de réticulation isocyanate (B), éventuellement la résine de polyacrylate (C) polyester-modifiée, renfermant des groupes hydroxy, un ou plusieurs solvants organiques, éventuellement des pigments et/ou des charges ainsi qu'éventuellement d'autres auxiliaires et additifs sont mélangés et éventuellement dispersés.

9. Procédé de préparation d'un revêtement multicouche protecteur et/ou décoratif sur une surface de substrat, dans lequel
(1) on applique une couche de fond pigmentée sur la surface du substrat,
(2) un film polymère est formé à partir de la couche de fond appliquée à l'étape (1),
(3) on applique, sur la couche de fond ainsi obtenue, une couche de finition transparente qui contient
(A) une résine de polyacrylate renfermant des groupes hydroxy,
(B) un agent de réticulation, et éventuellement
(C) une résine de polyacrylate polyester-modifiée, renfermant des groupes hydroxy, puis
(4) on durcit conjointement le film de couche de fond et le film de couche de finition,
caractérisé en ce que l'on utilise une composition de revêtement selon l'une quelconque des revendications 1 à 7 en tant que couche de finition.

10. Utilisation des compositions de revêtements selon l'une quelconque des revendications 1 à 7 en tant que couche transparente ou en particulier en tant que couche de finition pigmentée, en particulier dans le domaine des retouches d'automobiles.
